(19) 

**Europäisches Patentamt**
**European Patent Office**
**Office européen des brevets**

(11) **EP 4 074 663 B1**

(12) **EUROPEAN PATENT SPECIFICATION**

(45) Date of publication and mention
of the grant of the patent:
**30.07.2025   Bulletin 2025/31**

(51) International Patent Classification (IPC):
*C02F 1/469* ^(2023.01)    *C02F 101/20* ^(2006.01)
*H01M 8/06* ^(2016.01)    *H01M 8/1004* ^(2016.01)
*C02F 1/68* ^(2023.01)    *C02F 103/02* ^(2006.01)

(21) Application number: **22163130.2**

(22) Date of filing: **21.03.2022**

(52) Cooperative Patent Classification (CPC):
**C02F 1/4691;** C02F 1/68; C02F 2101/20;
C02F 2103/02; C02F 2201/005; C02F 2201/009;
C02F 2201/4615; C02F 2201/4617; C02F 2209/006;
C02F 2209/42; C02F 2209/44; C02F 2303/10;
Y02E 60/50

(54) **HYDROGEN-BASED FUEL CELL DECENTRALIZED DRINKING WATER PRODUCTION DEVICE**

AUF WASSERSTOFF BASIERENDE BRENNSTOFFZELLE DEZENTRALE
TRINKWASSERPRODUKTIONSVORRICHTUNG

DISPOSITIF DE PRODUCTION D'EAU POTABLE DÉCENTRALISÉ À BASE D'HYDROGÈNE AVEC
PILE À COMBUSTIBLE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:   **20.04.2021   KR 20210050931**

(43) Date of publication of application:
**19.10.2022   Bulletin 2022/42**

(73) Proprietor: **Korea University Research and
Business Foundation
Seoul 02841 (KR)**

(72) Inventors:
• **HONG, Seung-Kwan**
  **Gyeonggi-do (KR)**
• **KIM, Jung-Bin**
  **Seoul (KR)**

(74) Representative: **Impuls legal
Goethestraße 21
80336 München (DE)**

(56) References cited:
US-A- 5 980 716        US-A1- 2004 038 089
US-A1- 2010 055 508    US-A1- 2017 033 381

**Description**

CROSS REFERENCE TO RELATED APPLICATION

The present application claims priority to Korean Patent Application No. 10-2021-0050931, filed April 20, 2021.

BACKGROUND OF THE INVENTION

Field of the Invention

The present disclosure relates generally to a hydrogen-based decentralized drinking water production device. More particularly, the present disclosure relates to a hydrogen-based decentralized drinking water production device which uses water produced by a fuel cell.

Description of the Related Art

In recent years, various approaches to a hydrogen-based economy have been made, and for example, interest in a fuel cell is increasing.

A fuel cell is a kind of power generation device that converts chemical energy of fuel into electrical energy by electrochemically reacting the chemical energy in a fuel cell stack without converting the chemical energy into heat by combustion, and is applicable not only to supply power for industry, homes, and vehicle driving, but also to supply power to small electric/electronic products.

Such a fuel cell is currently being studied the most as a power source for driving a vehicle. For example, polymer electrolyte membrane fuel cell (PEMFC) may include a membrane electrode assembly (MEA) in which a catalytic electrode layer on which an electrochemical reaction takes place is attached to each of the opposite sides of an electrolyte membrane, through which hydrogen ions move, relative to the electrolyte membrane, a gas diffusion layer (GDL) through which reaction gases are evenly distributed and generated electrical energy is transferred, a gasket and a fastener through which reaction gases and cooling water are sealed and a proper combined pressure therebetween is maintained, and a bipolar plate through which reactive gases and cooling water move.

In the fuel cell having this configuration, hydrogen as a fuel and oxygen (air) as an oxidizing agent are supplied respectively to the anode and cathode of the membrane electrode assembly through a flow path of the bipolar plate. Hydrogen is supplied to an anode (also called "fuel electrode" or "hydrogen electrode" or "oxidation electrode"), and oxygen (air) is supplied to a cathode (also called "air electrode" or "oxygen electrode", "reduction electrode").

Hydrogen supplied to the anode is decomposed into a proton (H+) and an electron (e-) by the catalyst of an electrode layer configured on each of the opposite sides of the electrolyte membrane, and selectively only the proton passes through the electrolyte membrane, which is a cation exchange membrane, and is transferred to the cathode, and at the same time, the electron is transferred to the cathode through a gas diffusion layer, which is a conductor, and a bipolar plate.

At the cathode, the proton supplied through the electrolyte membrane and the electron transferred through the bipolar plate meet with oxygen in air supplied to the cathode by an air supply device to generate water. Due to the movement of the proton that occurs at this time, the flow of the electron through an external conductor occurs, and the flow of the electron generates an electric current.

Meanwhile, when water (produced water) generated by a fuel cell reaction or water (condensate water) condensed from reaction gas are present in the gas channel of a fuel cell, the produced water and condensate water block the flow of hydrogen and oxygen, so it is required to remove the produced water and condensate water from the fuel cell, and water coming from a fuel cell stack is collected in a water trap and is discharged to the outside.

However, in a conventional fuel cell field, focus is on effectively removing the discharged water as described above.

US 2017/033381 A1 illustrates for example a resource tower that uses water electrolysis to separate out its elemental and purified H2 hydrogen gas and O2 oxygen gas. These gases form a pressurized flow for electricity generation for distribution and transport to heights atop the resource tower. Fuel cells at the top of the resource tower electrochemically combine hydrogen gas and oxygen gas to produce electricity, heat, and water. The water resulting from the resource tower is purified and potable for distribution.

US2010055508 A1 relates to a fuel cell system that uses a desiccant to recover water from fuel cell effluent. The fuel cell system includes one or more fuel cells configured to generate electrical output from a supplied fuel and an oxidant while emitting effluent. The fuel cell system includes a desiccant disposed downstream of the one or more fuel cells. The desiccant may bind water from at least a portion of the effluent.

US2004038089 A1 concerns a method for treating and distributing water generated in a self-contained water using unit. Water for use in a self-contained water using unit, such as an aircraft, watercraft, ground conveyance, or stationary unit, is treated in a purification process including an evaporator and condenser stage so that water of different qualities can be distributed to different use locations in the self-contained unit. Purified water is filtered in an active charcoal filter and distributed by a distribution system. At least a portion of the purified water available for distribution is automatically salified.

US 5 980 716 A relates to a water treatment apparatus for a fuel cell system. Low conductivity cooling water for a fuel cell body is obtained by a water treatment apparatus which removes dissolved carbon dioxide gas in the exhaust gas condensate by a decarbonation column. Iron oxide is eliminated from the condensate as well as blowdown water by a MF membrane separator device. Iron ions are removed by a chelate resin column. Deionization occurs with an electrodeionizer which has an internal ion exchange resin.

SUMMARY OF THE INVENTION

Accordingly, the present disclosure has been made keeping in mind the above problems occurring in the related art, and the present disclosure is intended to propose a hydrogen-based decentralized drinking water production device which can provide high-quality drinking water in a safer and more environmentally friendly way by using a fuel cell.

The invention is defined in the independent claim. Further advantageous embodiments are defined in the dependent claims.

In order to achieve the above objective, according to one aspect of the present disclosure, there is provided a hydrogen-based decentralized drinking water production device including:

a fuel cell which produces electrical energy and water by receiving hydrogen and oxygen; an energy storage part in which the electrical energy produced by the fuel cell is stored; a water storage tank in which the water produced by the fuel cell is stored; a drinking water production part which produces drinking water by receiving the water stored in the water storage tank; and a first valve allowing the drinking water produced by the drinking water production part to flow selectively to one of a drinking water supply line and a domestic water supply line.

The device further includes: a second valve which regulates a flow of the water supplied to the drinking water production part from the water storage tank.

In addition, the drinking water production part includes: a capacitive deionization part which removes heavy metal ions from the water supplied from the water storage tank in an ion adsorption method, and a remineralization part which produces drinking water by adding minerals to water from which the heavy metal ions are removed by the capacitive deionization part.

In addition, the capacitive deionization part may operate in one mode of an ion adsorption mode in which heavy metal ions are removed through the ion adsorption method and an ion desorption mode in which adsorbed ions are desorbed; may operate by using DC power supplied from the energy storage part

or the fuel cell in the ion adsorption mode; and may store electrical energy released in the ion desorption mode in the energy storage part.

In addition, the device may further include: a controller which controls operations of the first valve, the second valve, and the capacitive deionization part, wherein when a supply start signal for supplying drinking water is input to the controller, the controller may control the second valve such that the second valve is opened, may control the first valve such that drinking water discharged from the remineralization part flows to the domestic water supply line for a preset period of initial operation time in a state in which the capacitive deionization part is controlled to operate in the ion adsorption mode, and then may control the first valve such that the drinking water flows to the drinking water supply line.

In addition, when a supply cut-off signal is input to the controller to stop the supply of the drinking water, the controller may control the first valve such that the drinking water discharged from the remineralization part flows to the domestic water supply line for a preset period of ion desorption time, may control the second valve such that only a preset amount of water flows, and may control the capacitive deionization part such that the capacitive deionization part operates in the ion desorption mode.

In addition, when the period of ion desorption time elapses, the controller may control the second valve such that the second valve is shut off.

In addition, when a water level of the water storage tank exceeds a preset reference water level in a state in which the supply start signal is not input and the second valve is partially shut off, the controller controls the second valve such that only a preset amount of water flows.

According to the present disclosure, in response to hydrogen economy, the hydrogen-based decentralized drinking water production device having the above-described configuration can provide high-quality drinking water in a safer and more environmentally friendly way by using the fuel cell.

BRIEF DESCRIPTION OF THE DRAWINGS

The above and other objectives, features, and other advantages of the present disclosure will be more clearly understood from the following detailed description when taken in conjunction with the accompanying drawings, in which:

FIGS. 1 and 2 are views illustrating the configuration of a hydrogen-based decentralized drinking water production device according to an embodiment of the present disclosure;
FIGS. 3A, 3B, and 3C are views for describing the operation of the capacitive deionization part of the hydrogen-based decentralized drinking water production device according to the embodiment of the present disclosure; and
FIGS. 4 and 5 are control block diagrams of the hydrogen-based decentralized drinking water production device according to the embodiment of the present disclosure.

DETAILED DESCRIPTION OF THE INVENTION

Advantages and features of the present disclosure and how to achieve them will become apparent with reference to an embodiment described below in detail in conjunction with the accompanying drawings. However, the present disclosure is not limited to the embodiment disclosed below and may be embodied in various different forms. The present embodiment is provided only to ensure that the present disclosure is complete, and to completely inform the scope of the present disclosure to those skilled in the art to which the present disclosure belongs. The present invention is only defined by the scope of the claims. Like reference numerals refer to like elements throughout this specification.

Hereinafter, the embodiment according to the present disclosure will be described in detail with reference to the accompanying drawings.

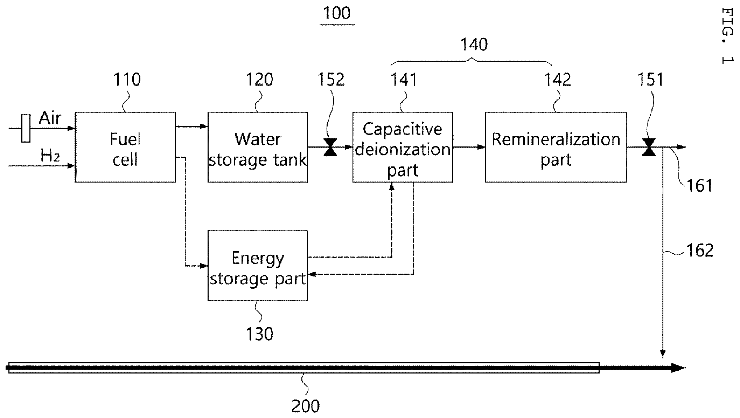

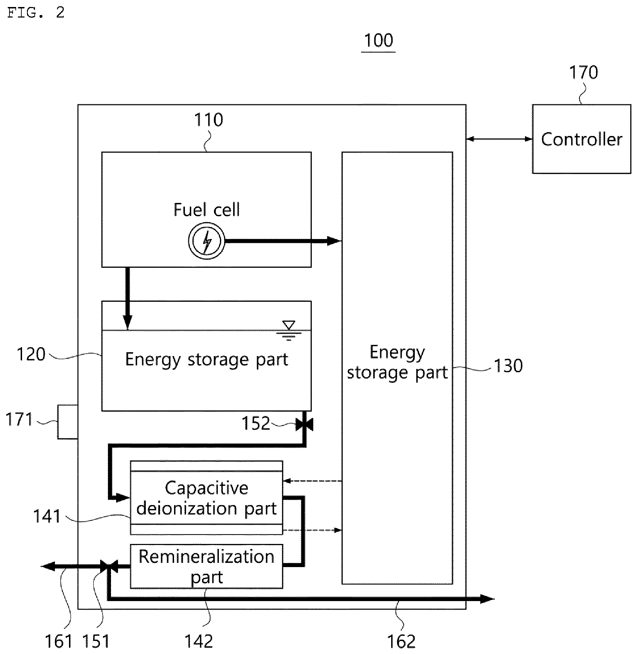

FIGS. 1 and 2 are views illustrating the configuration of a hydrogen-based decentralized drinking water production device 100 according to the embodiment of the present disclosure.

Referring to FIGS. 1 and 2, the hydrogen-based decentralized drinking water production device 100 according to the embodiment of the present invention (hereinafter, referred to as "a drinking water production device 100") includes a fuel cell 110, an energy storage part 130, a water storage tank 120, a drinking water production part 140, and a first valve 151. In addition, the drinking water production device 100 according to the embodiment of the present invention may include a controller 170.

The fuel cell 110 may produce electrical energy and water by receiving hydrogen and oxygen. Here, hydrogen may be supplied from a separate supply chain not shown. In addition, oxygen may be supplied through the inflow of external air, and may be supplied through an air filter to block the inflow of fine dust or other foreign matter contained in the air.

Hydrogen introduced into the fuel cell 110 may move to a cathode, and air containing oxygen may be introduced into an anode. Here, hydrogen and oxygen in the air react electrochemically to each other to produce water and electrical energy. The reaction is as follows.

- Cathodic reaction: $H_2 \rightarrow 2H^+ + 2e^-$

- Anodic reaction:

$$\frac{1}{2}O_2 + 2H^+ + 2e^- \rightarrow H_2O$$

- Total reaction:

$$H_2 + \frac{1}{2}O_2 \rightarrow H_2O$$

Here, the amount of water produced at the anode can be calculated as in [Equation 1].

[Equation 1]

$$Q_w = \frac{iAM_w\rho_w}{2F}$$

$Q_w$ : Water production amount

$i$ : Current density

$A$ : Membrane area

$M_w$: Molar mass of water

$F$: Faraday constant

Meanwhile, the energy storage part 130 may store electrical energy produced by the fuel cell 110. Here, the electrical energy stored in the energy storage part 130 may be used as power required to operate components constituting the drinking water production device 100 according to the embodiment of the present disclosure such as the drinking water production part 140, the first valve 151, and the controller 170.

Water produced by the fuel cell 110 may be stored in the water storage tank 120. As illustrated in FIG. 2, in the drinking water production device of the present disclosure, the water storage tank 120 may be disposed under the fuel cell 110 and the produced water may flow to the water storage tank 120 due to gravity.

In the embodiment of the present disclosure, for the water quality management of water stored in the water storage tank 120, a UV LED to block the growth of microorganisms may be installed to perform a sterilization function. In this case, the UV LED may operate by receiving electric energy produced from the fuel cell 110 as a direct current without conversion of the electric energy.

Meanwhile, the drinking water production part 140 may produce drinking water by receiving water stored in the water storage tank 120. In the embodiment of the present invention, the drinking water production part 140 includes a capacitive deionization part 141 and a remineralization part 142.

The capacitive deionization part 141 may remove heavy metal ions contained in water supplied from the water storage tank 120 in an ion adsorption method. Here, the capacitive deionization part 141 may operate in one mode of an ion adsorption mode in which the ion adsorption method described above is used for producing drinking water, and an ion desorption mode in which adsorbed ions are desorbed.

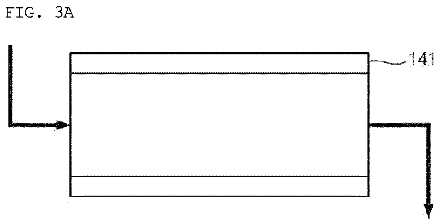

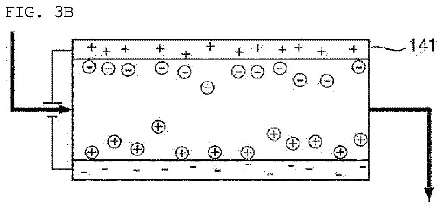

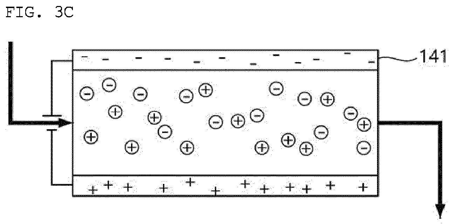

FIG. 3A is a view illustrating the general state of the capacitive deionization part 141, FIG. 3B is a view illustrating a state in which the capacitive deionization part 141 operates in the ion adsorption mode, and FIG. 3C is a view illustrating a state in which the capacitive deionization part 141 operates in the ion desorption mode.

While operating in the ion adsorption mode, the capacitive deionization part 141 may receive power required to operate from the energy storage part 130. Alternatively, the capacitive deionization part 141 may operate by receiving electric energy produced by the fuel cell 110 as a direct current without additional conversion of the electric energy.

In addition, electrical energy emitted while the capacitive deionization part 141 operates in the ion desorption mode may be stored in the energy storage part 130.

The remineralization part 142 may produce drinking water by adding minerals to water from which heavy metal ions are removed by the capacitive deionization part 141. Water passing through the fuel cell 110 and the capacitive deionization part 141 may have a pH of about 5-6 and may be slightly acidic, and may be very low in the concentration of total dissolved solids (TDS) and thus may not be suitable to be used as drinking water. Accordingly, the remineralization part 142 may produce drinking water by increasing the pH of the water through mineral additives and adding useful ions to the water so as to be suitable to be used as drinking water.

In the embodiment of the present disclosure, the remineralization part 142 includes stacks of magnesium hydroxide and calcium hydroxide including salt, and when low-pH water passes through the remineralization part 142, hydroxide ions may increase, and thus the pH of the water and the concentrations of magnesium ions and calcium ions may increase such that high-quality drinking water can be produced.

The first valve 151 may allow drinking water produced by the drinking water production part 140 to flow selectively to any one of a drinking water supply line 161 and a domestic water supply line 162. For example, when a supply start signal for supplying drinking water is input to the controller 170, the controller 170 may control the first valve 151 such that water produced by the drinking water production part 140 flows to the drinking water supply line 161. This will be described in detail later. Here, the supply start signal may be generated when a water supply button 171 installed in the drinking water production device 100 as illustrated in FIG. 2 is pressed.

Meanwhile, the drinking water production device 100 according to the embodiment of the present invention includes a second valve 152.

The second valve 152 may control the flow and amount of water supplied to the drinking water production part 140 from the water storage tank 120. Accordingly, the second valve 152 may control the flow and amount of water according to the control of the controller 170.

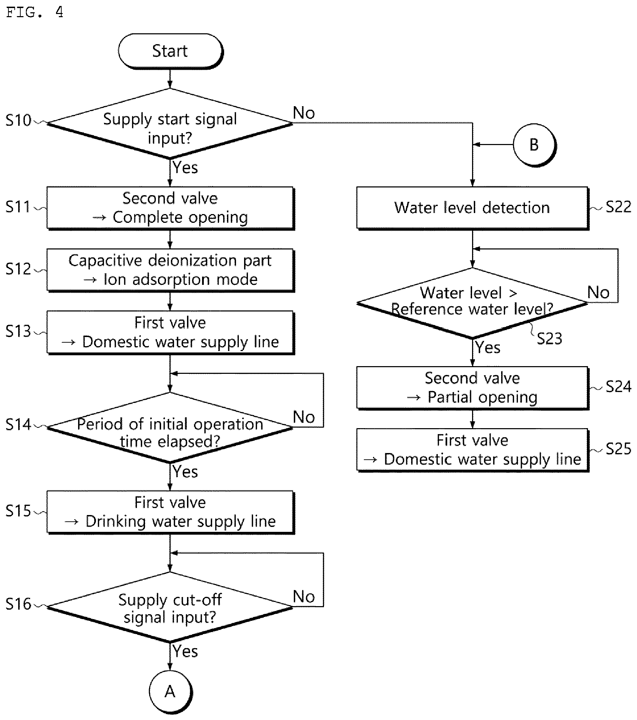

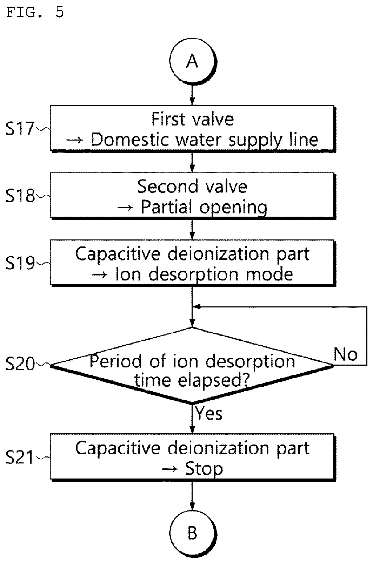

Hereinafter, the operation process of the drinking water production device 100 having the above-described configuration according to the embodiment of the present disclosure will be described with reference to FIGS. 4 and 5.

As in the previous example, when a user presses the water supply button 171, the supply start signal may be input to the controller 170 at S10. In this case, when the controller 170 receives the supply start signal, the controller 170 may control the second valve 152 such that the second valve 152 is completely opened at S11. Here, through the opening of the second valve 152, water stored in the water storage tank 120 may flow to the capacitive deionization part 141 of the drinking water production part 140.

In addition, the controller 170 controls the capacitive deionization part 141 such that the capacitive deionization part 141 operates in the ion adsorption mode at S12 so as to remove heavy metal ions from water supplied from the water storage tank 120. In addition, while the water passing through the capacitive deionization part 141 passes through the remineralization part 142, hydroxide ions may increase.

Here, in a state in which the capacitive deionization part 141 is controlled to operate in the ion adsorption mode, the controller 170 may control the first valve 151 such that the drinking water discharged from the remineralization part 142 flows to the domestic water supply line 162 for a preset period of initial operation time at S13. That is, water remaining in the capacitive deionization part 141, the remineralization part 142, and a pipe connecting the capacitive deionization part 141 with the remineralization part 142 may not be directly supplied as drinking water for the period of initial operation time but may be discharged to the domestic water supply line 162 for a predetermined period of time such that high-quality drinking water can be supplied.

When the period of initial operation time elapses at S14, the controller 170 may control the first valve 151 at S15 such that the drinking water discharged from the remineralization part 142 flows to the drinking water supply line 161, so the drinking water may be supplied to a user.

In the process in which the drinking water is supplied as described above, when a supply cut-off signal is input to the controller 170 at S16, for example, when the water supply button 171 is pressed again, the controller 170 may control the first valve 151 at S17 such that the drinking water discharged from the remineralization part 142 flows to the domestic water supply line 162 so as to stop the supply of the drinking water.

In addition, the controller 170 may partially open the second valve 152 to allow the flow of only a preset amount of water at S18. Accordingly, while the second valve 152 is partially opened, the controller 170 may control the capacitive deionization part 141 such that the capacitive deionization part 141 operates in the ion desorption mode at S19. Accordingly, heavy metal ions adsorbed to the capacitive deionization part 141 may be removed therefrom, and electrical energy discharged in this case may be stored in the energy storage part 130.

In addition, when a preset period of ion desorption time elapses at S20, the controller 170 may stop the operation of the capacitive deionization part 141 at S21 so as to stop an ion desorption process.

Referring back to FIG. 4, in a state in which the supply start signal is not input, that is, a state in which the drinking water is not supplied, or after the ion desorption process is completed, the controller 170 may detect the water level of the water storage tank 120 at S22, and when the detected water level exceeds a preset reference water level at S23, the controller 170 may control the second valve 152 to partially open the second valve 152 such that only a preset amount of water can flow at S24. In this case, the first valve 151 may be controlled at S25 such that water discharged from the remineralization part 142 flows to the domestic water supply line.

Accordingly, in a state in which water required for supplying drinking water later is stored in the water storage tank 120, some of the water may flow to the domestic water supply line 162 such that the contamination of water occurring during the stop of the water flow can be minimized.

Meanwhile, in the embodiment of the present disclosure, the domestic water supply line 162 is connected to a main supply line 200 for supplying domestic water, and the main supply line 200 receives reprocessed water supplied from a water purification facility.

Accordingly, the reprocessed water may be supplied along with water produced in the drinking water production device 100 according to the embodiment of the present disclosure such that the negative perception of the reprocessed water can be offset.

Although the embodiment of the present disclosure has been shown and described, it will be appreciated that those skilled in the art to which the present disclosure pertains may vary the present embodiment without departing from the principle of the present disclosure. The scope of the present invention will be defined by the appended claims.

**Claims**

1.  A hydrogen-based decentralized drinking water production device (100) **characterized in that** the device (100) comprises:

    a fuel cell (110) which produces electrical energy and water by receiving hydrogen and oxygen;
    an energy storage part (130) in which the electrical energy produced by the fuel cell (110) is stored;
    a water storage tank (120) in which the water produced by the fuel cell (110) is stored;
    a drinking water production part (140) which produces drinking water by receiving the water stored in the water storage tank (120); and
    a first valve (151) allowing the drinking water produced by the drinking water production part (140) to flow selectively to one of a drinking water supply line (161) and a domestic water supply line (162);
    a second valve (152) which regulates a flow of the water supplied to the drinking water production part (140) from the water storage tank (120), **characterized in that** the drinking water production part (140) comprises:

    a capacitive deionization part (141) which removes heavy metal ions from the water supplied from the water storage tank (120) in an ion adsorption method, and
    a remineralization part (142) which produces drinking water by adding minerals to water from which the heavy metal ions are removed by the capacitive deionization part (141).

2.  The device (100) of claim 1, **characterized in that** the capacitive deionization part (141) operates in one mode of an ion adsorption mode in which heavy metal ions are removed through the ion adsorption method and an ion desorption mode in which adsorbed ions are desorbed; operates by using DC power supplied from the energy storage part (130) or the fuel cell (110) in the ion adsorption mode; and stores electrical energy released in the ion desorption mode in the energy storage part (130).

3.  The device (100) of claim 2, **characterized in that** the device (100) further comprises:

    a controller (170) which controls operations of the first valve (151), the second valve (152), and the capacitive deionization part (141),
    wherein when a supply start signal for supplying drinking water is input to the controller (170), the controller (170) controls the second valve (152) such that the second valve (152) is opened, controls the first valve (151) such that drinking water discharged from the remineralization part (142) flows to the domestic water supply line (162) for a preset period of initial operation time in a state in which the capacitive deionization part (141) is controlled to operate in the ion adsorption mode, and then controls the first valve (151) such that the drinking water flows to the drinking water supply line (161).

4.  The device (100) of claim 3, **characterized in that** when a supply cut-off signal is input to the controller (170) to stop the supply of the drinking water, the controller (170) controls the first valve (151) such that the drinking water discharged from the remineralization part (142) flows to the domestic water supply line (162) for a preset period of ion desorption time, controls the second valve (152) such that only a preset amount of water flows, and controls the capacitive deionization part (141) such that the capacitive deionization part (141) operates in the ion desorption mode.

5. The device (100) of claim 4, **characterized in that** when the period of ion desorption time elapses, the controller (170) controls the second valve (152) such that the second valve (152) is shut off.

6. The device (100) of claim 5, **characterized in that** when a water level of the water storage tank (120) exceeds a preset reference water level in a state in which the supply start signal is not input and the second valve (152) is shut off, the controller (170) controls the second valve (152) such that only a preset amount of water flows.

**Patentansprüche**

1. Wasserstoffbasierte dezentrale Trinkwassererzeugungsvorrichtung (100), **dadurch gekennzeichnet, dass** die Vorrichtung (100) Folgendes umfasst:

   eine Brennstoffzelle (110), die durch Aufnahme von Wasserstoff und Sauerstoff elektrische Energie und Wasser erzeugt;
   ein Energiespeicherteil (130), in dem die von der Brennstoffzelle (110) erzeugte elektrische Energie gespeichert wird;
   einen Wasserspeichertank (120), in dem das von der Brennstoffzelle (110) erzeugte Wasser gespeichert wird;
   ein Trinkwasserproduktionsteil (140), das Trinkwasser produziert, indem es das in dem Wasserspeichertank (120) gespeicherte Wasser aufnimmt; und
   ein erstes Ventil (151), das es dem von dem Trinkwassererzeugungsteil (140) erzeugten Trinkwasser ermöglicht, selektiv zu einer Trinkwasserzufuhrleitung (161) oder einer Haushaltswasserzufuhrleitung (162) zu fließen;
   ein zweites Ventil (152), das einen Durchfluss des dem Trinkwassererzeugungsteil (140) aus dem Wasserspeicher (120) zugeführten Wassers reguliert, **dadurch gekennzeichnet, dass** der Trinkwassererzeugungsteil (140) umfasst:

   einen kapazitiven Entionisierungsteil (141), der Schwermetallionen aus dem aus dem Wasserspeicher (120) zugeführten Wasser in einem lonenadsorptionsverfahren entfernt, und
   einen Remineralisierungsteil (142), der Trinkwasser erzeugt, indem er dem Wasser, aus dem die Schwermetallionen durch den kapazitiven Entionisierungsteil (141) entfernt wurden, Mineralien hinzufügt.

2. Vorrichtung (100) nach Anspruch 1, **dadurch gekennzeichnet, dass** der kapazitive Deionisationsteil (141) in einem Modus eines lonenadsorptionsmodus, in dem Schwermetallionen durch das lonenadsorptionsverfahren entfernt werden, und einem lonendesorptionsmodus, in dem adsorbierte Ionen desorbiert werden, arbeitet; unter Verwendung von Gleichstrom, der von dem Energiespeicherteil (130) oder der Brennstoffzelle (110) zugeführt wird, in dem lonenadsorptionsmodus arbeitet; und elektrische Energie, die in dem lonendesorptionsmodus freigesetzt wird, in dem Energiespeicherteil (130) speichert.

3. Vorrichtung (100) nach Anspruch 2, **dadurch gekennzeichnet, dass** die Vorrichtung (100) ferner umfasst:

   eine Steuerung (170), die den Betrieb des ersten Ventils (151), des zweiten Ventils (152) und des kapazitiven Entionisierungsteils (141) steuert,
   wobei, wenn ein Versorgungsstartsignal für die Versorgung mit Trinkwasser in die Steuerung (170) eingegeben wird, die Steuerung (170) das zweite Ventil (152) so steuert, dass das zweite Ventil (152) geöffnet wird, das erste Ventil (151) so steuert, dass Trinkwasser, das aus dem Remineralisierungsteil (142) abgegeben wird, für eine voreingestellte Zeitspanne der anfänglichen Betriebszeit in einem Zustand, in dem der kapazitive Entionisierungsteil (141) so gesteuert wird, dass er in der lonenadsorptionsbetriebsart arbeitet, zu der Haushaltswasser-Versorgungsleitung (162) fließt, und dann das erste Ventil (151) so steuert, dass das Trinkwasser zu der Trinkwasser-Versorgungsleitung (161) fließt.

4. Vorrichtung (100) nach Anspruch 3, **dadurch gekennzeichnet, dass**, wenn ein Zufuhrunterbrechungssignal in die Steuerung (170) eingegeben wird, um die Zufuhr des Trinkwassers zu stoppen, die Steuerung (170) das erste Ventil (151) so steuert, dass das aus dem Remineralisierungsteil (142) abgegebene Trinkwasser für eine voreingestellte Zeitspanne der Ionendesorption in die Haushaltswasserzufuhrleitung (162) fließt, das zweite Ventil (152) so steuert, dass nur eine vorgegebene Wassermenge fließt, und den kapazitiven Entionisierungsteil (141) so steuert, dass der kapazitive Entionisierungsteil (141) im lonendesorptionsmodus arbeitet.

5. Vorrichtung (100) nach Anspruch 4, **dadurch gekennzeichnet, dass** die Steuerung (170) nach Ablauf der lonendesorptionszeit das zweite Ventil (152) so steuert, dass das zweite Ventil (152) abgesperrt wird.

**6.** Vorrichtung (100) nach Anspruch 5, **dadurch gekennzeichnet, dass** die Steuerung (170) das zweite Ventil (152) so steuert, dass nur eine voreingestellte Wassermenge fließt, wenn ein Wasserstand des Wasserspeichers (120) einen voreingestellten Referenzwasserstand in einem Zustand überschreitet, in dem das Versorgungsstartsignal nicht eingegeben wird und das zweite Ventil (152) geschlossen ist.

**Revendications**

**1.** Dispositif de production décentralisée d'eau potable à base d'hydrogène (100) **caractérisé par le fait que** le dispositif (100) comprend :

une pile à combustible (110) qui produit de l'énergie électrique et de l'eau en recevant de l'hydrogène et de l'oxygène ;
une partie de stockage d'énergie (130) dans laquelle est stockée l'énergie électrique produite par la pile à combustible (110) ;
un réservoir de stockage d'eau (120) dans lequel est stockée l'eau produite par la pile à combustible (110) ;
une partie de production d'eau potable (140) qui produit de l'eau potable en recevant l'eau stockée dans le réservoir de stockage d'eau (120) ; et
une première vanne (151) permettant à l'eau potable produite par la partie de production d'eau potable (140) de s'écouler sélectivement vers une conduite d'alimentation en eau potable (161) et une conduite d'alimentation en eau domestique (162) ;
une deuxième vanne (152) qui régule le débit de l'eau fournie à la partie de production d'eau potable (140) à partir du réservoir de stockage d'eau (120), **caractérisée par le fait que** la partie de production d'eau potable (140) comprend :

une partie de déionisation capacitive (141) qui élimine les ions de métaux lourds de l'eau fournie par le réservoir de stockage d'eau (120) par une méthode d'adsorption d'ions, et
une partie de reminéralisation (142) qui produit de l'eau potable en ajoutant des minéraux à l'eau dont les ions de métaux lourds sont éliminés par la partie de déionisation capacitive (141).

**2.** Le dispositif (100) de la revendication 1, **caractérisé en ce que** la partie de désionisation capacitive (141) fonctionne dans un mode parmi un mode d'adsorption d'ions dans lequel les ions de métaux lourds sont éliminés par la méthode d'adsorption d'ions et un mode de désorption d'ions dans lequel les ions adsorbés sont désorbés ; fonctionne en utilisant l'énergie continue fournie par la partie de stockage d'énergie (130) ou la pile à combustible (110) dans le mode d'adsorption d'ions ; et stocke l'énergie électrique libérée dans le mode de désorption d'ions dans la partie de stockage d'énergie (130).

**3.** Le dispositif (100) de la revendication 2, **caractérisé en ce que** le dispositif (100) comprend en outre :

un contrôleur (170) qui commande les opérations de la première vanne (151), de la deuxième vanne (152) et de la partie de désionisation capacitive (141),
dans lequel, lorsqu'un signal de démarrage de l'alimentation en eau potable est envoyé au contrôleur (170), ce dernier commande la deuxième vanne (152) de manière à ce qu'elle s'ouvre, commande la première vanne (151) de sorte que l'eau potable déchargée de la partie de reminéralisation (142) s'écoule dans la conduite d'alimentation en eau domestique (162) pendant une période prédéfinie de temps de fonctionnement initial dans un état dans lequel la partie de désionisation capacitive (141) est commandée pour fonctionner en mode d'adsorption d'ions, puis commande la première vanne (151) de sorte que l'eau potable s'écoule dans la conduite d'alimentation en eau potable (161).

**4.** Le dispositif (100) de la revendication 3, **caractérisé en ce que** lorsqu'un signal de coupure de l'alimentation est envoyé au contrôleur (170) pour arrêter l'alimentation en eau potable, le contrôleur (170) commande la première vanne (151) de sorte que l'eau potable déchargée de la partie de reminéralisation (142) s'écoule vers la conduite d'alimentation en eau domestique (162) pendant une période prédéfinie de temps de désorption d'ions, commande la deuxième vanne (152) de sorte que seule une quantité d'eau prédéfinie s'écoule, et commande la partie de désionisation capacitive (141) de sorte que la partie de désionisation capacitive (141) fonctionne en mode de désorption d'ions.

**5.** Le dispositif (100) de la revendication 4, **caractérisé en ce que** lorsque la période de temps de désorption d'ions est écoulée, le contrôleur (170) commande la deuxième vanne (152) de manière à ce que la deuxième vanne (152) soit fermée.

**6.** Le dispositif (100) de la revendication 5, **caractérisé en ce que** lorsqu'un niveau d'eau du réservoir de stockage d'eau (120) dépasse un niveau d'eau de référence prédéfini dans un état dans lequel le signal de démarrage de l'alimentation n'est pas entré et la deuxième vanne (152) est fermée, le contrôleur (170) commande la deuxième vanne (152) de sorte que seule une quantité prédéfinie d'eau s'écoule.

FIG. 1

FIG. 2

FIG. 3A

141

FIG. 3B

FIG. 3C

FIG. 4

```
                        ┌──────────┐
                        │  Start   │
                        └──────────┘
                              │
                              ▼
         S10 ◇─────────────────────────────────◇  No
              │  Supply start signal input?    │───────────────┐
              ◇─────────────────────────────────◇               │
                           │ Yes                        ┌─────┐  │
                           ▼                            │  B  │  │
         S11  ┌──────────────────────────┐             └─────┘  │
              │     Second valve          │               │     │
              │   → Complete opening      │               ▼     ▼
              └──────────────────────────┘        S22 ┌──────────────────────┐
                           │                          │  Water level detection│
                           ▼                          └──────────────────────┘
         S12  ┌──────────────────────────┐                     │
              │ Capacitive deionization   │                    ▼
              │  part → Ion adsorption    │         ◇─────────────────────◇ No
              │         mode              │          │ Water level >       │──┐
              └──────────────────────────┘           │ Reference water     │  │
                           │                          │ level?         S23  │  │
                           ▼                         ◇─────────────────────◇  │
         S13  ┌──────────────────────────┐                  │ Yes            │
              │     First valve            │                 ▼                │
              │ → Domestic water supply   │       S24 ┌──────────────────┐   │
              │         line              │           │  Second valve     │   │
              └──────────────────────────┘           │ → Partial opening │   │
                           │                          └──────────────────┘   │
                           ▼                                   │              │
         S14 ◇─────────────────────◇ No           S25 ┌──────────────────────┐
              │ Period of initial   │──┐               │   First valve         │
              │ operation time      │  │               │ → Domestic water      │
              │ elapsed?            │  │               │   supply line         │
             ◇─────────────────────◇  │               └──────────────────────┘
                     │ Yes            │
                     ▼                │
         S15  ┌──────────────────────────┐
              │     First valve            │
              │ → Drinking water supply   │
              │         line              │
              └──────────────────────────┘
                           │
                           ▼
         S16 ◇─────────────────────◇ No
              │  Supply cut-off     │──┐
              │  signal input?      │  │
             ◇─────────────────────◇  │
                     │ Yes
                     ▼
                  ┌─────┐
                  │  A  │
                  └─────┘
```

FIG. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020210050931
- US 2017033381 A1
- US 2010055508 A1
- US 2004038089 A1
- US 5980716 A